# NEW EUROPEAN PATENT SPECIFICATION

(11) **EP 2 940 447 B2**
(45) Date of publication and mention of the opposition decision: **20.11.2024**
(45) Mention of the grant of the patent: 09.08.2017
(21) Application number: 15165422.5
(22) Date of filing: 28.04.2015
(51) Int. Cl.: E03B 7/07, G01M 3/28, F17D 5/02

(54) **A SYSTEM AND METHOD FOR MONITORING OF PIPING SYSTEMS**
SYSTEM UND VERFAHREN ZUR ÜBERWACHUNG VON ROHRLEITUNGSSYSTEMEN
SYSTÈME ET PROCÉDÉ DE SURVEILLANCE DE SYSTÈMES DE TUYAUTERIE

(30) Priority: 28.04.2014 SE 1450498
(43) Date of publication of application: 04.11.2015
(73) Proprietor: Villeroy & Boch Gustavsberg AB, 134 29 Gustavsberg (SE)
(72) Inventor: Rydetorp, Björn, 447 95 Vårgårda (SE); Olsson, Kristian, 447 94 Vårgårda (SE)
(74) Representative: Valea AB

(56) References cited:
- US-A1- 2006 059 977
- US-A1- 2009 271 045

## Description

### TECHNICAL FIELD

The present invention refers to a control unit, a system comprising a control unit and a valve unit, and a method for monitoring and detecting different types of leakage in piping systems, as well as taking measures at the detection of leakage.

### BACKGROUND OF THE INVENTION

Leakage in real estate water piping systems causes major damage annually. A plurality of different types of leakage may occur in such water piping systems. Since these kinds of water piping systems are pressurized, an undetected leakage, or if no measures are taken, the leakage will continue resulting in major damage.

A broken water pipe in a tap water system may cause substantial leakage since large amounts of water quickly flows out in the surrounding space. It is therefore important that such leakage is detected promptly and that the water supply is automatically shut down in case of such leakage.

Even smaller leakage, for example caused by a defective seal along a pipeline, a smaller hole in a pipeline, leaky valve, etc., often referred to as drip leakage, may cause major damage since it can be difficult to detect. May drip leakage continue without action, it may cause major damage on surrounding structural elements, such as walls, roof, ceiling, system of joists, etc. Other types of drip leakage, caused by for example a leaky faucet in a sink or similar, may be costly over time if allowed to continue for a longer period without any measures are taken.

It is known from prior art to use humidity sensors positioned at locations in the real estate at risk of leakage, such as kitchen, bathroom, laundry room etc. These humidity sensors may be arranged to communicate with a central control unit in the real estate, which may be configured such that some kind of alarm is set off when a humidity sensor detects leakage, and/or such that a shut-off valve is closed and thereby turns off the supply of water to the tap water system. One problem with this technique is that only leakage in the direct proximity of the humidity sensor will be detected.

Another known technique uses pressure testing to detect leakage in a water piping system, whereby usually a part of the water piping system is shut off, and the pressure is monitored. NO 329802, for example, describes this technique. One problem is that the pressure testing should take place at a time point when there is no consumption in the system, since a user that during the pressure testing for examples opens a faucet to drain water will result in inaccurate readings. This also presents an inconvenience for the user. Some prior art have tried to solve this problem by pressure testing at predetermined time points decided beforehand to be consumption-free, often at certain time points during the night, or by pressure testing when the consumer closes the valve.

Other known techniques measures flow quantity, flow length or flow rate, and makes a comparison with a predetermined threshold to detect leakage. One example of such a system is described in US 7174771 B2. One problem with these systems is that they do not take into consideration activities in which a larger consumption than usual is to be normal, for example filling of a pool or similar. It is therefore a risk of false alarm and/or that the water supply will be shut off during the ongoing demand.

A system and a method for detecting water and/or gas leaks are disclosed in the US patent application no. US 2006/0059977 A1. The method detects leaks by detecting the absence of leak free periods. A similar approach is taken in the US patent application no. US 2009/0271045 A1, which uses a controller which receives water usage information originating from a property's water meter. A comparison is made between the used water with the allowable water budget. Water free periods are used, but the periods are set as a function of a period of the day, e.g. during the night, during which it is assumed that flow free periods exist. The method detects leaks by detecting the absence of leak free periods.

The above described known techniques all have in common that they do not take into consideration the individual circumstances and consumption patterns for different kinds of real estate, as well as variations and/or changes in these circumstances and consumption patterns. For example different households have different habits in terms of at what time points water consumption takes place, as well as what demand of water may be regarded as normal. These habits may as well change or vary over time. Such a change or variation in consumption pattern means that previously set thresholds for parameters relating to flow or time points when no consumption is likely to occur no longer are correct.

### SUMMARY

Below is presented methods, control units and system to solve or at least minimize the problems described above. One purpose is to achieve an automatic adjustment to the individual circumstances of the specific water piping system being monitored. Another purpose is to achieve an automatic update of the parameters based on what conclusions are drawn regarding events such as leakage or unintentional consumption. These parameters are updated automatically with time, in order to reflect the user's habits or change of habits. With these presented methods, control units and systems, several types of leakage, from small drip leakage to large flow leakage can be detected.

This described method, system and control unit, is particularly suitable for water piping systems, such as tap water systems for supplying water to homes, both single family houses and apartment buildings, but also for other kinds of real estate such as offices or industrial buildings. If the system is used in an apartment building, a system for each flat can be provided, or a common system for the entire building.

These presented methods, systems and control units are described specifically referring to water piping systems for real estate. However, they may equally well be applied to other types of piping systems, for example gas pipelines in real estate. Nor are the solutions limited to piping systems, such as gas- or water pipelines in real estate, but may equally well be applied to other types of piping systems in different types of applications.

This presented system is adapted so that it gets to know the individual water piping system. The control unit is configured to through a learning function learn to recognize the consumption pattern for the specific water piping system to which it is attached. In case of the system being installed in a single family house, the consumption pattern reflects the household's habits. The system is adapted so that the different parameters, such as thresholds related to different flow quantities as well as periods which normally are flow free, are characteristic of the specific water piping system. Since the system has a learning function, these parameters are continuously updated, and thereby adjusted to an altered situation.

One purpose is that based on the specific event detected carry out one or more measures. Such a measure may be to automatically shut off the water supply to the water piping system, and to issue different kinds of alarms or indications, to inform a user, a real estate owner, or service personal that an undesired event, such as leakage or unexpected consumption has occurred.

Below firstly the method will be described in detail. The thereafter presented control unit, and the system in which the control unit may be included, are configured to carry out the method.

A method is presented for monitoring of a piping system and/or the detection of one or more events in a piping system. The piping system comprises a shut-off valve, arranged in the piping system. The method comprises the following steps:
a) continuously or substantially continuously sampling values related to flow in the piping system;
b) from the values related to flow obtained in step a), obtaining a flow pattern for the piping system,
c) from said flow pattern deciding one or more parameters;
d) monitoring and/or testing the piping system during operation by one or more of the parameters determined in step c), wherein in step c) a parameter is the occurrence of one or more flow free period, said flow pattern is updated continuously, said flow pattern is updated according to a rolling schedule from values relating to flow recorded during a predetermined time period, and the one or more parameters are updated continuously according to the rolling schedule.

The method may also comprise a step of obtaining a flow pattern according to step b) for a number of predetermined time intervals, such as a consecutive number of 24 hour periods or parts of a number of 24 hour periods, obtaining a trend for the flow in the piping system. The one or more parameters may thereafter be decided from this trend.

An event may be leakage, for example drip leakage, or a large leakage. A large leakage may turn out as a flow that deviates from what has been recorded earlier for the specific piping system. An event may be a flow which is larger and/or longer than previously recorded flows, or a flow which changes more rapidly then what is considered normal for the piping system in question. This could be leakage, such as a large and/or sudden leakage, for example due to a broken pipeline, or due to unauthorized draining, such as faucet being left open, etc.

The shut-off valve is preferably a valve which may be closed and opened via an electronic signal from a control unit. The shut-off valve is preferably provided and configured to automatically close at the detection of one or more events. The shut-off valve may preferably be a magnetic valve or a motor operated valve such as a ball valve. It may as well be possible to manually close or open the valve.

Values obtained from flow may be the measure of flow (flow volume per time unit) measured by a flowmeter. Values obtained from flow may also be a flow change between consecutive samplings, and/or a time length during which a continuous flow is recorded, or other parameters obtained from flow.

The method above may be carried out during a time period, such that the flow pattern is obtained based on the values related to flow sampled for a number of time periods, such as a predetermined number of time periods. For example may the flow pattern be obtained based on values related to flow for a predetermined number of consecutive 24 hour periods, or parts of 24 hour periods. Also other time periods or time lengths may be possible. A number of 24 hour periods relates preferably to several 24 hour periods, but there may be occasions when it relates to only a 24 hour period. Consecutive relates to 24 hour periods following one after the other. During this time period at least some flow values or flow related values are recorded, such that based on these flow values one or more flow pattern may be created, which reflects characteristic quantities related to consumption. A flow pattern may relate to one or more values or flow related data which reflects characteristic values for consumption and/or the flow in the piping system. From this flow pattern may even a trend curve be derived, which illustrates how the consumption in the system varies over time, for example for the number of consecutive 24 hour periods or another time period during which the flow values have been sampled.

Obtaining flow pattern or trends may comprise that graphs are calculated, of the kind that may be visualized on a screen. This is however not necessary for function of the method. Flow pattern does not need to comprise calculating graphs which may be visualized, but may comprise that from sampled values related to flow in a piping system record and store one or more flow related data, preferably one or more flow related data for predetermined time units, for example each 24 hour period. Preferably, for each 24 hour period the highest value for each data which represents recorded values related to flow is saved. If a higher value is recorded later during the same 24 hour period, the previous value will be replaced with this value. This will be described more in detail later. For example may for each 24 hour period, or other time period, information be saved referring to what time points during the time period that is flow free, largest flow, longest continuous flow, largest flow change, etc. One or more of these values then make a flow pattern for respective time period, for example 24 hour period. From this may a flow pattern over a longer time be obtained, such as a flow pattern over a number of time periods. A trend may comprise a summary of these respective data over a number of consecutive 24 hour periods or other time periods. From this flow pattern, or from a trend, may then one or more parameters be derived.

A flow pattern may refer to a summary of different types of flow related quantities, from which different parameters, which are described below, may be derived. The method may nevertheless comprise for each type of flow related quantity generate a specific flow pattern, such that from each trend one type of parameter may be derived.

Step d) then comprises the following steps:
d1) carrying out a pressure testing during at least one flow free period determined according to c); whereby the pressure testing preferably is carried out by closing the shut-off valve and monitoring the pressure in the piping system downstream of the shut-off valve. Flow free periods may be periods, or time intervals, which have been flow free during preceding predetermined time periods, for example during a preceding number of 24 hour periods or parts of 24 hour periods.

A flow pattern comprises here within a summary over periods with and without flow during a preceding time period. For example an overview of flow free periods during one or more 24 hour periods, or parts of 24 hour periods. A trend may comprise an overview over periods with and without flow for a number of 24 hour periods, or other time unit.

By deciding whether there have been one or more time periods which have been flow free repeatedly during a preceding time, for example a number of preceding 24 hour periods, as well as when these occurred, may the probability of a demand to happen during a pressure testing be minimized.

Pressure testing may be carried out by detecting a possible pressure drop, by calculating the difference between the pressure detected at the beginning of the pressure testing and the pressure detected at the end of the pressure testing. The presence of and the possible size of this pressure drop is used to draw conclusions on the presence of drip leakage. A detected pressure drop in step d1) may be compared to a pressure drop threshold for detecting the presence of leakage in the piping system. If a pressure change occurs, this may indicate leakage. A small, or relatively small, pressure drop may indicate drip leakage, such as a leaky faucet or a small hole along a pipeline.

The pressure may also be sampled during the pressure testing. The pressure drop may be calculated between adjacent samplings, and this value may be compared with a second pressure drop threshold. If the pressure drop exceeds this second pressure drop threshold it may indicate that a flow, that is consumption, has occurred, for example by a user that has opened a faucet. The method may comprise to abort the pressure testing if the pressure drop exceeds a pressure drop threshold. The method may further be adapted so that pressure testing is reinitiated at a later time. The pressure testing may be carried out again at the next scheduled pressure testing occasion, and/or at the next flow free period. This second pressure drop threshold may be the same as the pressure drop threshold above, or another pressure drop threshold.

The method may be adapted such that the 24 hour period is divided in periods of predetermined length. It may also be possible to design the periods to have different length during different parts of the 24 hour period. The period should be sufficiently long for a reliable pressure testing to be carried out, i.e. the period should be sufficiently long so that even drip leakage will give rise to a pressure drop during the pressure testing. The period should also be sufficiently long, to reflect with some certainty the flow pattern during the period. These periods are fixed and predetermined, such that they occur during the same time interval each 24 hour period. The method is thus adapted to find one or more of such periods, which have been flow free during a predetermined number of 24 hour periods. One or more of these flow free periods are chosen, to carry out a pressure test.

Another alternative may be instead of dividing the 24 hour period into predetermined periods, recording determining a flow in a continuous time schedule, and from these data determining flow free time intervals during the 24 hour period, i.e. time points between which no flow occurs. By using this way of determining flow free periods during a number of 24 hour periods, and comparing these data to find time periods which have been flow free during a predetermined number of 24 hour periods, flow free periods may be determined. If these are sufficiently long, according to what was described above, a pressure test may be carried out during such a period.

Preferably pressure testing may be carried out during a time interval that is within, and shorter than a flow free period. Pressure testing may thus preferably be carried out during a part of a flow free period, preferably during a part in the middle of the flow free period. In this way the likelihood for a flow to occur during pressure testing may be even further reduced. If the time period stretches from time point t1 to time point t2, pressure testing may accordingly be chosen to be carried out between time points t1+Δt₁ and t2-Δt₂.

Pressure testing may be carried out during a plurality of flow free periods each 24 hour period. These flow free periods are preferably not adjacent to one another in time. Pressure testing may thus be carried out at different time during a 24 hour period.

The method may be adapted to carry out an action if the presence of leakage is detected. The action may comprise one or more of the following steps:
keeping the valve closed;
sending a signal to another electronic unit;
issuing an alarm.

By keeping the valve closed potential damages or other consequences due to the drip leakage may be prevented. Sending a signal to another electronic unit may comprise one or more of the following: sending an SMS, e-mail or other message via a wireless connection, sending a signal to for example a residential alarm.

The method may be adapted so that the presence of drip leakage is concluded only after a pressure drop corresponding to drip leakage has been detected during a predetermined number of pressure tests, preferably during a predetermined number of consecutive pressure tests. The presence of drip leakage may thus be concluded already after a pressure drop has been detected during a pressure test, or only after a plurality of pressure tests. The method, and control unit, may be adapted so that the actions above, such as an alarm or other indication are issued when the presence of drip leakage has been concluded.

In step c) a parameter may be a flow length threshold. Step d) may comprise the following steps:
d2) recording the time during which a flow is ongoing;
d3) comparing this time with the flow length threshold, and
d4) carrying out an action if exceeding this flow length threshold.

If detecting a flow which exceeds a flow length threshold, or a flow which exceeds a flow threshold, a pre-warning sequence may be activated. A pre-warning sequence may give notice to a specified user, or a remote communication device such as an online computer or a mobile phone or the like. The purpose of a pre-warning sequence is to avoid a permanent closing the shut-off valve to stop the flow.

A suitable pre-warning sequence may be to temporarily close the shut-off valve. A temporary closing time may be from 2-60 seconds, preferably 3-30 seconds. After temporarily closing the shut-off valve, the shut off valve is opened again. If a flow is still registered, e.g. after 5-300 seconds, preferably after 20-120 seconds, after the temporarily closing of the shut-off valve, a temporarily closing is initiated again as described above. The temporarily closing of the shut-off valve may be repeated 2-5 times, preferably 3 times. If a flow is still registered after a pre-warning sequence, a true warning is initiated and the shut-off valve is permanently closed.

By permanently closed is hereby meant that the shut-off valve needs to be manually opened, or the system or device needs to be reset. The shut-off valve can be manually opened directly at the shut-off valve itself, or via a user interface on a computer or mobile phone or the like.

If it is registered that the flow is stopped during a pre-warning sequence, the regular monitoring of the flow is resumed, and no warning is issued or no other action is taken.

The method may incorporate to activate a second operational state if no flow is detected during a time period which exceeds a predetermined threshold for activation of said second operational state. Such a second operational state may also be referred to as away state, vacation state, or similar, and may be a state which is activated when no consumption exists in the piping system, for example due to that no user is deemed to be present in the real estate. If a second operational state is issued, and a pre-warning sequence is detected, or issued, the second operational state is terminated and the ordinary monitoring of the flow is resumed.

If a flow stop is detected, the flow pattern the sampling of values related to flow in the piping system is temporarily stopped for 2-60 minutes, preferably for 5-30 minutes. Thereafter the sampling of values is activated again, i.e. resumed.

The recorded flow length, i.e. the recorded time during which a flow is ongoing, may be updated continuously for a predetermined time period. A predetermined time period may be a 24 hour period or part of a 24 hour period. For each time period the value for the longest flow length may be updated each time a higher value is recorded. The flow length threshold may be based on the highest value for longest flow length recorded over y1 consecutive 24 hour periods, or parts of 24 hour periods. Thus, the flow length threshold may be updated each 24 hour period based on the highest value of flow length during preceding y1 24 hour periods.

The recorded time during which a flow is ongoing may be from 10 min - 60 min. Other intervals may however also be applicable depending on the application in which the piping system is used. For example a piping system in an industrial building may have flow lengths which are normally longer than in an apartment building. The flow length threshold may be from 5 min - 80 minutes.
The flow pattern may here within comprise one or more values related to flow length, for example the length of the longest, or a certain number of longest flows. The flow pattern may further comprise an overview or summary of these longest flow lengths during a preceding time period, such as a number of 24 hour periods.
If the flow occurs during a longer time than the flow length threshold, this may indicate a long flow. This may be due to a leakage for example. The action may also be carried out when the threshold has been reached.

The action may comprise to carry out one or more of the following steps:
i) closing the shut-off valve and then opening it again;
ii) closing the shut-off valve;
iii) sending a signal to another electronic unit;
iv) issuing an alarm.

Closing the valve to open it again may imply that the valve closes during a relatively short period, for example in the order of a few seconds, and then opens again. When the valve is closed the water supply is interrupted. A user may in this way be informed that the water consumption has occurred during a longer time than what is regarded as customary in the system. The user may then for example choose to close the faucet through which the user is draining water. In this case, there will be no flow when the shut-off valve is opened. The system may then return to normal operation.

The method may be adapted so that an action according to ii)-iv) above is carried out and/or that a long flow is detected if the flow length threshold is again reached or exceeded after the valve has been opened according to action i).

The method may be adapted so that a long flow is detected only when the flow length threshold has been reached, or exceeded, a predetermined number of times The predetermined number of times a flow need to have reached or exceeded the flow length thresholds, to be detected as a long flow may be from 2- 5.

The flow length threshold may be updated according to the following:
measured flow length is compared to a saved highest value for flow length; if measured flow length is greater than said saved highest value for flow length, then measured flow length is saved as the highest value for flow length, and the flow length threshold is updated based on this.

The flow length threshold may be determined as the longest time during which a continuous flow has been recorded, multiplied with a coefficient. This coefficient may preferably be larger than 1. It is however possible to use a coefficient smaller than 1. In cases where measured flow length reaches or exceeds current flow length threshold and the valve is closed according to action i) or ii) above, the valve will be closed as soon as the threshold has been reached. If this flow length is recorded as new longest flow length, it may result in an increase of the threshold, depending on the size of the coefficient. It may also be possible, with the aid of an algorithm decide whether a measured value which is higher than the saved highest value relates to an event, and if that is the case choose not to save this value as a highest value.

As mentioned above values related to flow are recorded continuously or substantially continuously. One or more highest values are saved, preferably also one or more highest values that has been measured every time unit, which for example may be a 24 hour period, or part of 24 hour period. Since the flow pattern is based on flow values measured during the latest y1 number of 24 hour periods, and is continuously updated to be based on the values measured during the latest y1 number of 24 hour periods, thus the highest measured value or the highest measured values are also updated.

In step c) a parameter may be a flow change threshold. Step d) then comprises the following steps:
d5) calculating the flow change between two sampled flow values;
d6) comparing this flow change with the flow change threshold, and
d7) carry out an action if exceeding this flow change threshold.

The flow pattern may here within comprise one or more values related to flow change, for example the size of the largest, or a certain number largest, flow changes, and an overview or summary of these largest flow changes over a time period, for example over a number of consecutive 24 hour periods.

The method may alternatively be adapted so that the action is carried out when the calculated flow change is equally large as or larger than the flow change threshold.

If the flow change between two consecutive samplings is larger than the flow change threshold, this may indicate a sudden leakage, for example due to a broken pipeline.

The mentioned action may comprise one or more of the following steps:
i) closing the shut-off valve and then opening it again;
ii) closing the shut-off valve;
iii) sending a signal to another electronic unit;
iv) issuing an alarm.

These actions are analogous to that described above for the parameter flow length threshold.

Closing the valve to open it again may mean that the valve closes during a relatively short period, for example in the order of a few seconds, and then opens again. When the valve is closed the water supply is interrupted. A user who deliberately consumes water will then likely notice that the water supply has been interrupted, and will likely for example turn on the faucet alternatively in another way examine what has occurred. This may results in that the flow when the valve is opened again do not have the same value as before the valve was closed, alternatively there will be no flow if the faucet is closed when the valve is opened again.

The method may be adapted so that an action according to ii)-iv) above is carried out and/or that a large flow change is detected if the flow change threshold again is exceeded after the valve has been opened according to i).

The method may be adapted so that a large flow change is detected only when the flow change threshold has been exceeded a predetermined number of times, analogous to that described above for the flow length threshold.

The flow change threshold may be updated and determined in the same way as the flow length threshold.

The flow change threshold may be updated according to the following:
measured flow change is compared with saved highest value for flow change;
if measured flow change is greater than saved highest value for flow change then measured flow change is saved as highest value of flow change, and the flow change threshold is updated based on this.

The flow change threshold may be determined as the largest flow change which has been recorded multiplied with a flow change coefficient. This coefficient may preferably be larger than 1. It is however possible to use a coefficient smaller than 1.
In step c) a parameter may be a flow threshold. Step d) then comprises the following steps:
d8) comparing a sampled flow value with a flow threshold;
d9) comparing this flow value with the flow threshold, and
d10) if exceeding this flow threshold carry out an action.

The flow pattern may here within comprise one or more values related to flow, for example the value of the largest flow, or a certain number of largest flows, and an overview or summary of these largest flows over a time period, for example over a number of 24 hour periods.

This action may be an action according to that described above for flow length and flow change.

The flow threshold may be determined and updated analogus with that described above for flow length and flow change.

The method may be adapted so that a large flow is detected only when the flow threshold has been exceeded a predetermined number of times.

The flow pattern may be initially determined during a learning period. During the learning period the consumption pattern for the piping system is recorded, that is the system, and in particular the control unit, learns to recognize a normal consumption pattern. As starting point may predefined start values for the different parameters be used. For the control unit these predefined values may be factory settings. During the learning period these will be updated with parameters characteristic of the specific piping system, in the same way as describe above for updating of parameters. The learning period may be a period during which no detection of events occurs.

The flow pattern is updated continuously. This implies that the flow pattern is updated according to a rolling schedule, where the flow pattern continuously is updated from values related to flow recorded during a predetermined time period, for example a predetermined number of 24 hour periods. The flow pattern may be determined over a first number y1 of 24 hour periods. If the flow pattern is based on y1 number of 24 hour periods, it is updated continuously so that it is based on data stretching y1 24 hour periods back in time, starting from the current 24 hour period. The parameters which are determined from the flow pattern, and/or from the recorded values which relate to flow, are thus also updated continuously according to the rolling schedule.

The method described above is carried out continuously, whereby the flow pattern is updated continuously. This is done according to a rolling schedule, such that the flow pattern always stretches over a preceding time period of predetermined length, for example a predetermined number of preceding 24 hour periods, i.e. over a number of 24 hour periods directly preceding the current 24 hour period. Thereby the flow pattern is continuously updated to reflect the current circumstances in the specific piping system and the consumption habits of its users.

According to the method may for each 24 hour period the highest, or a number of highest, measured values for different flow parameters, such as flow length, flow, and flow change, be saved. Since the flow pattern is continuously updated according to a rolling schedule, only the values from the latest y1 number of 24 hour periods are used. Earlier values are not taken into account calculating the parameters. Thresholds are therefore calculated from, for each flow parameter, the highest measured value over the latest y1 24 hour periods. Thereby may the thresholds be continuously updated as a function of the current circumstances and consumption pattern. This implies that thresholds over time may change both upward and downward.

The parameters flow length threshold, flow threshold, and/or a flow change threshold may be determined from a flow pattern based on said first number of 24 hour periods y1, or another time length y1.

The flow free periods may be determined from a flow pattern based on a second number of 24 hour periods y2, which are less than said first number of 24 hour periods y1. This implies that the flow free periods may be based on a shorter period, that is on a subset of the complete flow pattern. The flow free periods are thereby determined over the latest y2 24 hour periods. This is advantageous since the specific time points during a 24 hour period when the consumption takes place often varies faster than the consumption as such, that is flow length, flow change and flow. The parameter flow free periods is thereby updated faster than the other parameters. In this context it may typically involve a number of days or a week.

This implies that flow length threshold, flow threshold, and/or a flow change threshold is updated slower than the flow free periods.

A computer program to carry out the method according to that presented above. This computer program may contain algorithms and/or instructions to carry out the method which has been described above, according to one or more of the different possibilities which has been described. This computer program may be delivered to update a control unit which is described below. This computer program may be delivered to update an existing control unit connected to a shut-off valve, a flowmeter and possibly a pressure gauge connected in a piping system.

In some applications it may be conceivable to monitor only flow and events related to flow length, flow change and/or flow quantity. It may in this case be sufficient that the computer program and the control unit are configured to carry out the parts of the method which relates to these parameters.

A control unit is presented, which is configured to communicate with a valve unit in a piping system for carrying out a method as described above. The control unit may be a control unit as described below referring to the system for monitoring of a piping system. The control unit may thus be the control unit which is included in the system below. The control unit may also be a separate control unit configured to be provided to an existing valve unit as described below, to carry out a method as described above. The control unit may therefore be programmed according to the computer program above.

A system for monitoring of flow and/or detection of one or more events in a piping system is presented. The system comprises a valve unit adapted to be connected in the piping system and a control unit adapted to communicate with the valve unit. The valve unit comprises a shut-off valve adapted to open and/or close an inlet to the piping system, a pressure gauge provided downstream the valve to measure pressure in the piping system downstream the valve, and a flowmeter provided to measure flow in the piping system. The control unit is adapted to communicate with the shut-off valve to control closing and/or opening of the same, with the flowmeter to obtain and record data from the flowmeter, and with the pressure gauge to obtain data from the pressure gauge. The control unit is adapted to communicate with the valve unit to carry out a method according to any one of the appended claims 1 to 13. The control unit is configured to communicate with the shut-off valve, the flowmeter and in relevant cases also with the pressure gauge, to be able to carry out the method according to one, several of, or all of the different possibilities described above.

The valve unit may be a compound physics component which comprises a shut-off valve, a flowmeter and a pressure gauge, where at least the pressure gauge is provided downstream the valve. The flowmeter may also be provided downstream the valve. The valve unit is however not necessarily a unitary, compound physical component, but may be separate parts according to above, which are adapted to be connected in a piping system. The shut-off valve is a valve in which its opening and closing respectively, and in some embodiments also the degree of opening, may be controlled by the control unit. The shut-off valve may be a motorized valve, for example a ball valve, or a magnetic valve. The control unit may thereby automatically activate closing of the valve when pressure testing shall be done. The control unit may be adapted to activate closing of the valve based on the detection of one or more of the following events such as leakage, drip leakage, a long time period during which flow is ongoing, a large flow change, a large flow.

The system is adapted for mounting on an incoming water pipeline, downstream the main water tap and any sprinkler devices. If there is a water gauge, which records water consumption for reading by and/or communication with the water supplier, the system should be mounted downstream of which.

The control unit is thus also configured to analyse obtained data to detect the presence of any events. Based on results of comparison or other analysis of data with saved parameters, and stored instructions may the control unit activate one or more of the actions which has been described above. Among other things may the control unit activate closing of the valve, issuing of an indication that an event possibly exists, issuing an alarm, sending of a signal to another unit etc.

The control unit may comprise various different subcomponents which enables the execution of the method described above and also the additional features described below. The control unit may therefore comprise components such as one or more processor units, memory units, display, communication units, inputs and outputs for communication with other units, input units, and indicators for one or more events.

The processor unit may be configured to record and analyse data from the flowmeter and pressure gauge, and to give instructions regarding any action based on the detection of an event. The processor unit, or another unit within the control unit, may be configured to control closing and opening of the valve.

The control unit preferably comprises also one or more memory units, for storage of data, foremost flow pattern obtained according to the method above, and parameters which have been determined from the flow pattern. The memory unit may also contain computer programs, instructions and/or algorithms to carry out different aspects of the method.

The communication units may be configured to communicate with other units, for example for communication of alarms and/or signals or data, for example related to flow pattern, consumption, trends, detection of events and/or other results of analysis of data to another unit, to inform users, real estate owners, alarm centre, or similar. The communication units may therefore be adapted to enable wired and/or wireless communication with various other units.

The control unit may be configured to activate a second operational state if no flow is detected during a time period which exceeds a predetermined threshold for activation of said second operational state. Such a second operational state may also be referred to as away state, vacation state, or similar, and may be a state which is activated when no consumption exists in the piping system, for example due to that no user is deemed to be present in the real estate.

The control unit may be configured to at the second operational state, said thresholds flow change threshold and/or flow time threshold are replaced with a second flow change threshold and a second flow time threshold respectively, which are lower than flow change threshold and flow time threshold respectively. These second thresholds may be predetermined thresholds, or may be defined to be made outof a determined proportion of the from data calculated thresholds. The control unit may thus be configured that the thresholds obtained from measured flow values and/or flow pattern, are replaced with lower thresholds when the system switches to the second operational state. This is advantageous, since leakage or other undesired events thereby may be detected faster.

The control unit may be adapted to be connected to and/or communicate with a residential alarm or similar. The control unit may be adapted such that the second operational state may be automatically activated when the residential alarm is activated, and/or may be activated manually by the user. The control unit may be configured to issue an alarm via the residential alarm.

The system may comprise an alarm- or indication unit adapted to issue an alarm or an indication related to the detection of an event or a possible event. An indication implies that it is indicated that an event has been detected, but otherwise no further action is taken. The control unit may be configured to issue an alarm if an indication has been has been issued a predetermined number of times.

This alarm- and indication unit may be a part of the control unit, or may be connected thereto. The control unit may be configured to communicate signals for alarms and indications to other units, for example by sending one or more signals via SMS to one or more phone numbers, for example to the real estate owner, the care taker, or an alarm centre, or by transmitting information via internet, or by sending an electrical signal to another electronic unit, for example a residential alarm, which in turn may forward to an alarm centre.

When the control unit comprises an alarm- and indication unit, it may imply that the control unit is adapted to issue an acoustic and/or optical signal. For example may the control unit be provided with one or more indicators to indicate the presence, or possible presence, of one or more events. The control unit may also be configured to issue a sound signal in response to an event being detected. Possibly different types of sound signals may be issued depending on the type of event that has been detected.

Indicators for one or more events may comprise for example light emitting diodes (LEDs) which by its colour may indicate that a certain event has been detected. According to that described above, the method may be adapted such that a specific event need to have been detected a number of times before an alarm is issued. The control unit may therefore be configured such that the indicators are green when no event has been detected, that is when the piping system supposedly operates as intended. When an event has been detected one time, the corresponding indicator may change colour to orange, and then to red when the corresponding event has been detected a predetermined number of times and an alarm is issued. For example the method may be adapted such that an alarm for drip leakage is issued only when the drip leakage has been detected at x consecutive pressure tests. Corresponding indicator may then be configured to be green as long as no drip leakage is detected. If drip leakage has been detected at one to x-1 number of consecutive pressure tests, the indicator is orange. If no drip leakage is detected during the next pressure test, the indicator turns green again. However if drip leakage is detected also at the x'th consecutive pressure testing, the indicator switches to red. The same may apply for the other parameters.

The control unit may be adapted to close the valve, if an alarm is issued.

The control unit, and the system, may be configured to record each time one or more thresholds are exceeded, but that an event is deemed to have happened only when a specific threshold has been exceeded a predetermined number of times.

The system may also comprise one or more humidity sensors, wherein the control unit is configured to communicate with these humidity sensors to record data from these humidity sensors. These humidity sensors, sometimes also referred to as water sensors or water detectors, may be positioned at locations in the real estate at risk of leakage, for example below or in the vicinity of laundry machines, dish washers etc. The control unit may be configured to carry out an action, analogous with the actions described above, based on the data from these humidity sensors.

The control unit may comprise a USB port or similar for reading of data, downloading of data, and/or software updates.

The control unit may be adapted to be able to connect wireless to the internet and/or via a network, to be controlled and/or read via a phone, in particular via a so called smartphone, computer or similar.

The system may also be adapted as to be turned off and on manually, and so that different functions may be activated manually. The system may be adapted such that opening and closing of the shut-off valve may be activated manually. The control unit may be configured such that it is possible to temporarily disengage its function, in order to temporarily stop recording flow data and/or detecting events. It may be possible to disengage all or some of the different functions pressure testing, monitoring of long flow, and monitoring of flow change. This may be advantageous for example for temporarily exceeding determined thresholds without these being updated and without an action being issued, for example at a deliberate large draining such as filling of a pool. The control unit may be adapted such that this disengagement is limited to a certain time, after which the monitoring of the piping system is automatically reengaged. This time may be preset, or it may be chosen by the user at the time of the temporary disengagement of flow monitoring.

The system may be adapted such that pressure testing may be initiated manually. This may be advantageous for example if one suspects drip leakage somewhere in the piping system. -

### BRIEF DESCRIPTION OF THE DRAWINGS

The embodiments of the above described method and the above described system and its different components will below be described more in detail with reference to accompanying drawings, wherein:
- Fig. 1: illustrates schematically an embodiment of the system;
- Fig. 2: illustrates a perspective view of the system according to an embodiment;
- Fig. 3: illustrates an example of a flow pattern;
- Fig 4: illustrates a table for determining of the parameter flow free periods;
- Fig. 5A: illustrates the parameter flow length represented in the form of a table;
- Fig. 5B: illustrates the parameter flow length represented in the form of a graph;
- Fig. 6: illustrates the parameter flow change represented in the form of a graph.

### DETAILED DESCRIPTION OF PREFERRED EMBODIMENTS

Below is described some of the preferred embodiments of the method, the system and the most important components, and the control unit which has been described above. In the description below it will be referred to a tap water system, i.e. a water piping system for supply water to a real estate. The system, the control unit and the method may however be analogous applied also on other types of piping systems. It should be understood that the system and the control unit are configured, or may be configured, to carry out all variants of the method which has been described above.

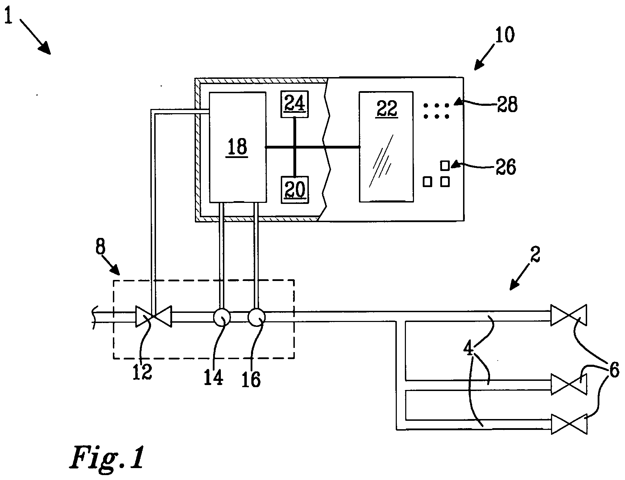

Fig 1 illustrates schematically a system 1 for monitoring of flow and/or detecting of one or more events in a piping system 2. Such a piping system comprises a plurality of branches 4 and tapping points 6, in the form of for example water taps, toilets, laundry machines, dish washers etc. An event may relate to one or more types of undesired activity in the piping system, such as leakage, for example drip leakage, a long time during which a flow is ongoing, a large flow change, or a large flow. That a flow is ongoing for a long time, may for example be due to an ongoing leakage in a pipe or in a tapping point, or due to that a water tap has been left open. A sudden, large flow change may indicate that a pipeline has broken. This gives a large leakage. A large flow may as well indicate a large leakage somewhere in the piping system, or that one or more tapping points 6 have been left completely, or nearly completely, open.

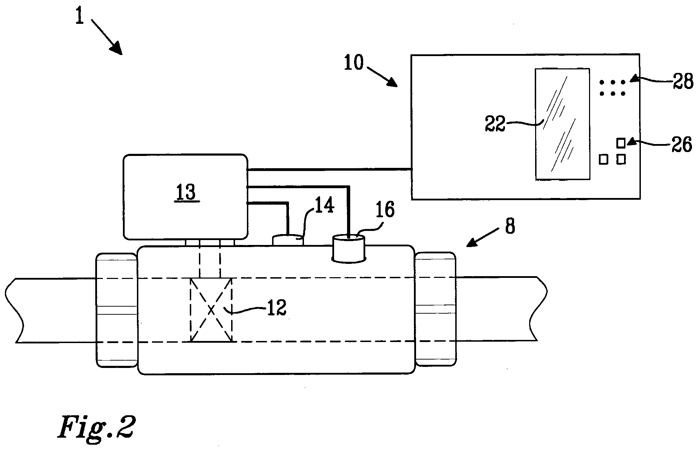

The system 1 comprises a valve unit 8 adapted to be connected in the piping system 2 and a control unit 10 adapted to communicate with the valve unit 8. In Fig. 1 the valve unit 8 is schematically shown in the form of the components provided to a piping system 2. Fig. 2 illustrates a perspective view of the valve unit 8 in the form of a compound physical unit. The valve unit 8 comprises a shut-off valve 12 adapted to open and/or close an inlet to the piping system, a pressure gauge 14 and a flowmeter 16 provided downstream the shut-off valve 12 to measure pressure and flow respectively in the piping system 2 downstream the valve 12. The control unit 10 may communicate with the shut-off valve 12 to control and control closing and/or opening of the same. The control unit 10 communicates also with the flowmeter 16 to obtain and record data from the flowmeter 16, i.e. flow data, and with the pressure gauge 14 to obtain data from the pressure gauge. The control unit 10 is configured to communicate with the valve unit 8 to carry out the method which has been described above. The control unit 10 is particularly adapted to sample and record data, and to analyze these in accordance with the method. The control unit 10 is further configured to initiate one or more events in response to the detection of one or more events, according to that described above. Fig. 2 also shows a unit 13 which carries out closing or opening of the shut-off valve, based on a signal issued by the control unit 10. If the shut-off valve 12 is a motorized valve, the unit 13 may be a motor.

The control unit 10 comprises different components which enables implementation of the method and the functions which has been described above. The control unit 10 in the illustrated example comprises therefore a processor unit 18, a memory unit 20, a display 22, a communication unit 24 for communication with the other units, input units 26, and indicators 28, which for example may comprise light emitting diodes.

The processor unit 18 is configured to record and analyze data from the flowmeter 16 and pressure gauge 14, to activate opening and closing of the shut-off valve 12, and to give instructions regarding possible action based on the detection of an event.

The display 22 may show different types of information. For example may current status of the system be indicated, such as normal function, that certain events has been recorded, overview of issued alarms, menu choices for settings, menus for activating or deactivating of different functions, etc. Input units 26 may for example be knobs and/or buttons to scroll through menus and make selections and settings, acknowledge alarms, etc.

Via the communication unit 24 the control unit may communicate with other units, for example for transmitting of alarms, signals and/or data for example related to flow pattern, consumption, trends, detection of events and/or other results of analysis of data to another unit. The control unit also comprises a memory unit 20, in which for example in the method obtained flow pattern and therefrom determined parameters are saved. In the memory unit 20 may also a computer program with algorithms for carrying out the method be saved.

According to Fig. 1 and 2 the control unit 10 is configured to, via the processor unit 18, control closing of the shut-off valve 12 based on the detection of one or more events such as leakage, drip leakage, a flow which is ongoing for a long time, a large flow change, a large flow. These events are preferably detected from data from the pressure gauge 14 and/or the flowmeter 16. When the control unit 10 in some embodiments also communicates with for example humidity sensors (not illustrated) positioned at different locations in the real estate, the processor unit 18 may be adapted to initiate closing of the shut-off valve 12 based on data from one or more of such humidity sensors.

The system 1 may comprise an alarm unit in the form of indicators 28, which are intended to indicate the presence of different events and to indicate alarm when one or more events have been determined, according to that described above. The control unit 10 may further be configured to via one of the communication units 24 be connected to a residential alarm (not illustrated), to at determination of the presence of one or more events be able to issue an alarm via the residential alarm. The control unit 10 may also be adapted to automatically switch to the above described second operational state, also referred to as the away state, when a user activates the residential alarm and leaves the real estate.

Via the input units 26 the system may, in particular the control unit 10, be turned off and on, and a number of different menu choices may be made, for example menu choices regarding what is shown on the display 22, manual activating and deactivating of different functions, reading or overview of issued alarms, etc.

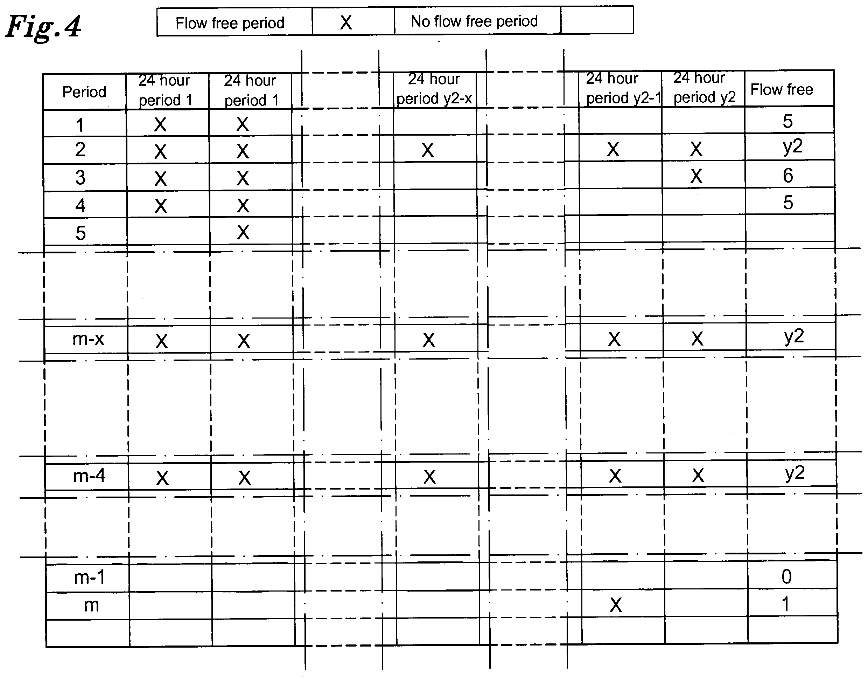

The control unit 10 samples continuously or substantially continuously data related to flow from the flowmeter 16. From these values flow pattern for the piping system is created, from which the different parameters may be determined, which is illustrated in Fig. 4 to 6.

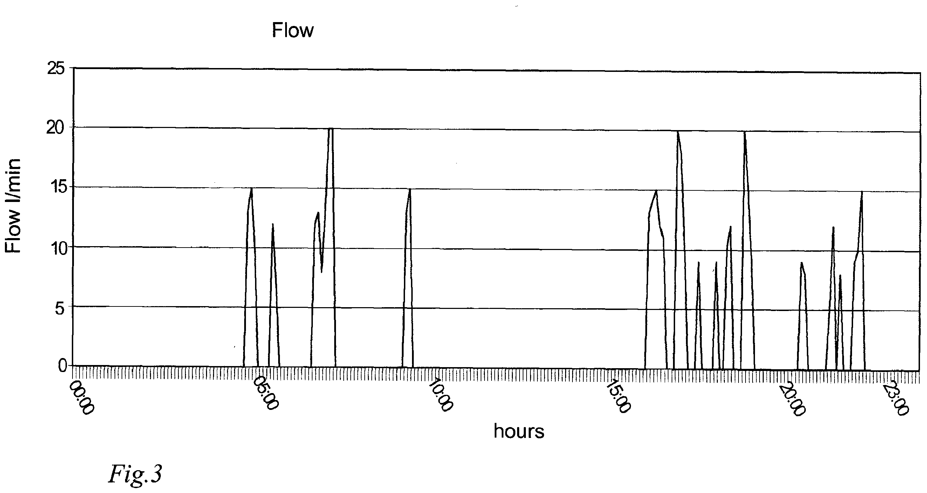

Fig.3 illustrates schematically flow over time, in this case over a 24 hour period. According to what may be seen here, the consumption varies over a 24 hour period, both regarding the occurrence of consumption and the size and speed of change of the consumption. In Fig. 3 a number of time periods during which no flow has been recorded is seen. The system is adapted to use one or more of these parameters to monitor and/or test the piping system. The control unit is programmed to carry out the method described above.

Fig. 4 illustrates how the parameter flow free periods is determined according to an embodiment. The control unit is configured to control the system to carry out the method, in accordance with that described above. In this example the flow pattern consists of a table of occurrence or absence of flow during predetermined periods, during a preceding time length, which in this case corresponds to a certain number y2 of preceding 24 hour periods. In this described embodiment the 24 hour period is divided into predetermined time periods. If the flow is zero during a time period as such it is a flow period. For each 24 hour period which time periods from 1 to m which has been flow free is noted. The periods which have been flow free during all y2 24 hour periods represents suitable flow free periods for pressure testing, and represents therefor the parameter flow free periods. In the example in Fig. 4 the period 2, m-x and m-4 have been flow free during the latest y2 24 hour periods. The control unit is configured to at firsthand to pressure test during these periods. The control unit may further be programmed so that if no periods exist, which have been flow free during all y2 24 hour periods, the program searches for periods which have been flow free during the highest number of y2 24 hour periods, and initiates pressure testing during one or more of these periods. The table in Fig. 4 is updated at least once every 24 hour period, thus always representing the latest y2 24 hour periods. Which periods that have been flow free during all y2 24 hour periods, or during the highest number of preceding 24 hour periods, is therefore updated continuously, such that the parameter flow free periods always is updated according to the current circumstances and determined from a preceding time length, here the preceding 24 hour periods. In this described embodiment each 24 hour period is divided in time periods, and the system preferably takes into consideration the preceding y2 24 hour periods.

When the piping system is to be tested for drip leakage, the parameter is the occurrence of one or more flow free periods. Pressure testing is carried out by the control unit 10 at the start of the flow free period or during the flow free period sends a signal to close the shut-off valve 12. When the shut-off valve 12 has been closed the pressure is sampled via the pressure gauge 14, and recorded by the processor unit 18. The pressure difference between samplings is calculated and compared with a pressure drop threshold, to check that no consumption is occurring. If a pressure drop larger than a threshold would be detected, the pressure testing is aborted since this may indicate that a user has opened a faucet or in another way demands water. To establish whether a drip leakage occurs, the pressure drop is calculated over the complete pressure testing period and is compared with a pressure drop threshold. When the pressure test is aborted prematurely or terminated after completion of the pressure testing the control unit 10 stops sampling pressure data from the pressure gauge 14, and the control unit 10 initiates opening of the shut-off valve 12.

Flow is monitored substantially continuously, by substantially continuously sampling and recording flow values from the flowmeter 16. Since the parameters are flow length, flow and/or flow change these may therefore be monitored at the same time or separately, during all or parts of the periods during which pressure testing is not carried out. When pressure testing is carried out the shut-off valve 12 is closed, and the flow thus be zero or at least very close to zero. Thereby data from the flowmeter 16 during pressure testing will not give rise to an update of parameters, and events based on long flow, large flow change or large flow will also not be detected. When the shut-off valve 12 is opened again after a completed or aborted pressure testing the flow in the piping system 2 may again occur, and parameters may be updated.

Values related to flow may also be saved in for example the form of a vector or matrix. The control unit is also configured to calculate different flow parameters from sampled values related to flow. These may be saved in the memory unit 20, where also the determined flow free periods are saved. The processor unit 18 is configured such that these parameters are updated on a rolling schedule. For example may the highest, or a certain number of highest, flow parameters which have been measured or calculated during a predetermined time length be saved. Here within it relates preferably to flow parameters which are used to calculate parameters which are used to monitor the piping system 2. Here within it preferably relates to largest flow, largest flow length, and largest flow change.

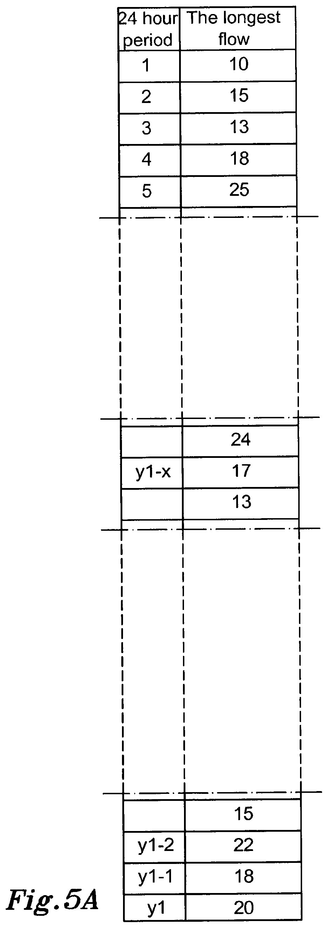

Fig. 5A illustrates a flow pattern in the form of a table where for each 24 hour period, during the preceding y1 24 hour periods, the length (in minutes) of the longest continuous flow is recorded. For the current 24 hour period the value for the longest continuous flow is updated each time a new, higher value is recorded. The highest of all these values is used to calculate the parameter flow length threshold. From the example which is illustrated I Fig. 5A it may be derived that the longest continuous flow relates to 24 hour period 5, with a time length of 25 minutes. Referring to the table in Fig. 5A, the time during which a flow is ongoing may be from 5 minutes - 60 minutes. Other intervals may however also be applicable depending on the application in which the piping system is used. For example a piping system in an industrial building may have flow lengths which are normally longer than in an apartment building. In this illustrated example these data are updated on a rolling schedule over the last y1 24 hour periods. The flow pattern will therefore once per 24 hour period be shifted a step, and the data which has been recorded for 24 hour periods further back in time than y1 24 hour periods will no longer show in the flow pattern, and will no longer be taken into account in calculation of thresholds. Thereby may a new, highest value, which may be larger than, smaller than or equal to the preceding highest value, be the base for the calculation of flow length threshold. The threshold may be calculated according to that described initially. The threshold may thereby be shifted both upward and downward, and is thereby updated to current circumstances for the piping system in question, for example depending on how the user's consumption habits vary. The flow length threshold may be from 5 min - 80 minutes.

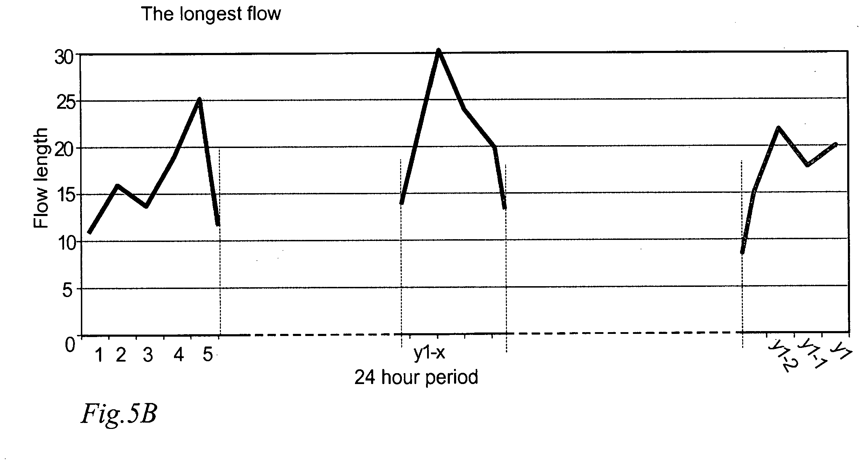

Fig. 5B illustrates the same data as Fig. 5A, but in the form of a graph which shows the largest measured flow length during each 24 hour period 1 to y1. The flow pattern is in this case represented by a graph. This graph is updated in the same way as described above for the table in Fig. 5A. The graph in Fig. 5B is cut off on two sides of 24 hour period y1-x and 24 hour periods adjacent thereto. This is to indicate that between 24 hour period 5 and 24 hour period y1, and between 24 hour period y1 and 24 hour period y1-2, can involve a range of different number of 24 hour periods, according to that described above. It is however conceivable that y1 has a value such that the different parts of the graph in Fig. 5B connects to each other.

To detect an event related to a flow which can be regarded is an unusually long flow, the processor unit 18 records or calculates how long a continuous flow is ongoing, and compares this with the flow length threshold that has been determined from the flow pattern in Fig. 5A, B. If the flow length threshold is reached or exceeded, the processor unit 18 carries out or initiates an action. At the same time the flow length is compared with the saved, longest flow lengths, and possible these are updated. The method may also be adapted so that only when the flow length threshold has been reached, or exceeded, a predetermined number of times, will a flow be detected as a long flow and the processor unit 18 carries out or initiates an action. The predetermined number of times a flow need to have reached or exceeded the flow length threshold may be from 2- 5.

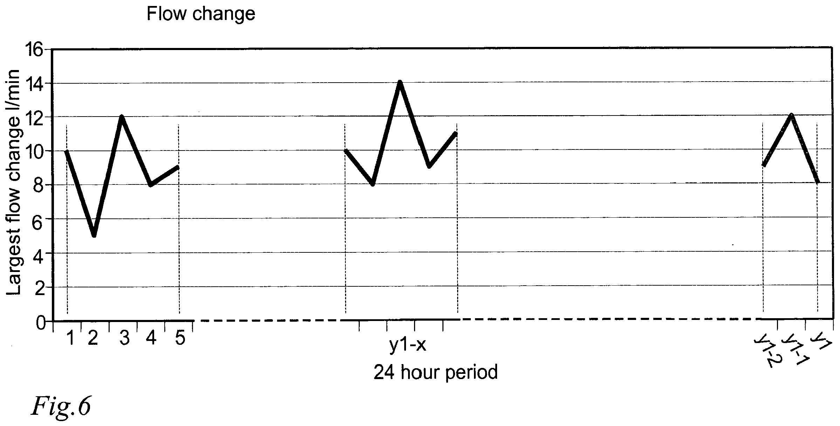

Fig. 6 illustrates a flow pattern for the parameter flow change. For each 24 hour period the largest measured flow change is recorded. The flow change is calculated as the difference in flow between two samplings. The flow pattern for flow change is updated in the same way as the flow pattern for flow length, i.e. on a rolling schedule, which has been described above with reference to Fig. 5A and 5B. From this flow pattern may the parameter flow change threshold be calculated based on the largest flow change during the latest y1 24 hour periods. As for flow lengths the flow pattern for flow change threshold may comprise a vector comprising data on the largest flow change which has been measured for each 24 hour period, analogous with Fig. 5A. In this illustrated example y1 24 hour periods are used. As for Fig. 5A Fig. 6 shows parts of a graph of a flow pattern.

To detect an event related to a flow change which may be regarded as an unusually large flow change the control unit samples flow data from the flowmeter 16, calculates the flow change between consecutive samplings and compares the flow change with the flow change threshold which has been determined from the flow pattern in Fig. 6. If the flow change threshold is reached or exceeded, the processor unit 18 carries out or initiates an action. At the same time the flow change is compared with the saved, highest flow changes, and possibly these are updated.
In a similar manner to what has been described for the parameters flow length and flow change, may a parameter flow threshold be determined from a flow pattern over largest flow values. Monitoring and detection of events related to a flow which may be regarded as an unusually large flow also occurs in a similar manner as that described above for the parameters flow length and flow change.

## Claims

1. A method for monitoring of a piping system (2) and/or detection of one or more events in a piping system which comprises a shut-off valve (12), arranged in said piping system, said method comprising the steps of
a) continuously or substantially continuously sampling values related to flow in said piping system;
b) from said values related to flow obtained in step a), obtaining a flow pattern for said piping system;
c) from said flow pattern determining one or more parameters;
d) monitoring and/or testing the piping system during use of one or more parameters determined in step c),
**characterized in that**
in step c) a parameter is the occurrence of one or more flow free periods, **in that** said flow pattern is updated continuously, **in that** said flow pattern is updated according to a rolling schedule from values relating to flow recorded during a predetermined time period, and **in that** the one or more parameters are updated continuously according to the rolling schedule.

2. The method according to claim 1, whereby step d) comprises the following step:
d1) carrying out pressure testing during at least one flow free period determined according to c); whereby the pressure testing preferably is carried out by closing the valve and monitor the pressure in the piping system downstream the shut-off valve.

3. The method according to claim 2, whereby a measured pressure drop in step d1) is compared with a pressure drop threshold for detecting the occurrence of leakage in the piping system.

4. The method according to claim 2 or 3, whereby the pressure is sampled and the pressure drop between two samplings is compared with a second pressure drop threshold, and whereby the pressure testing is aborted if this second pressure drop threshold is exceeded.

5. The method according to any one of claims 2 to 4, whereby pressure testing is carried out during a plurality of flow free periods, which are not adjacent to one another in time.

6. The method according any one of claims 2 to 5, whereby an action is carried out if the occurrence of leakage has been detected, whereby said action comprises one or more of the following steps:
keeping the shut-off valve closed;
sending an electronic signal to another electronic unit;
issuing an alarm.

7. The method according to any preceding claim, whereby in step c) a parameter is a flow length threshold,
and whereby step d) comprises the following steps:
d2) recording the time during which a flow is ongoing;
d3) comparing this time with the flow length threshold, and
d4) carrying out an action if exceeding this flow length threshold.

8. The method according to claim 7, whereby said action comprises one or more of the following steps:
closing the shut-off valve and then opening it again;
closing the shut-off valve;
sending a signal to another electronic unit;
issuing an alarm.

9. The method according to claim 7 or 8, whereby the flow length threshold is determined as the longest time during which a continuous flow has been recorded, multiplied with a coefficient.

10. The method according to claim 9, whereby the flow length threshold is updated according to the following:
measured flow length is compared to a saved highest value for flow length;
if measured flow length is greater than said saved highest value for flow length,
then measured flow length is saved as the highest value for flow length, and the flow length threshold is updated based on this.

11. The method according to any preceding claim, whereby in step c) a parameter is a flow change threshold,
and whereby step d) comprises the following steps:
d5) calculating the flow change between two sampled flow values;
d6) comparing this flow change with the flow change threshold, and
d7) carrying out an action if exceeding this flow change threshold.

12. The method according to claim 11, whereby said action comprises one or more of the following steps:
closing the shut-off valve and then opening it again;
closing the shut-off valve;
sending a signal to another electronic unit;
issuing an alarm.

13. A system (1) for monitoring of flow and/or detection of one or more events in a piping system (2); wherein the system comprises:
a valve unit (8) adapted to be connected to said piping system (2) and a control unit (10) adapted to communicate with the valve unit (8), wherein said valve unit (8) comprises
a shut-off valve (12) adapted to open and/or close an inlet to said piping system,
a pressure gauge (14) provided downstream said shut-off valve (12) to measure pressure in said piping system (2),
a flowmeter (16) provided to measure flow in said piping system (2);
wherein said control unit (10) is adapted to communicate with said shut-off valve (12) to control closing and/or opening of the same,
said flowmeter (16) to obtain and record data from said flowmeter (16), and with said pressure gauge (14) to obtain data from said pressure gauge (14),
wherein
said control unit (10) is adapted to communicate with said valve unit (8) to carry out a method according to any one of claims 1 to 12.

14. The system (1) according to claim 13, wherein said control unit (10) is adapted to activate closing of said shut-off valve (12) based on the detection of one or more of the following events:
leakage, drip leakage, a flow which is ongoing for a long time, a large flow change, a large flow, wherein preferably said control unit (10) is configured to activate a second operational state if no flow is detected during a time period which exceeds a predetermined threshold for activation of said second operational state.

## Patentansprüche

1. Verfahren zum Überwachen eines Rohrleitungssystems (2) und/oder der Detektion von einem oder mehreren Vorkommnissen in einem Rohrleitungssystem, das ein Absperrventil (12) aufweist, das in dem Rohrleitungssystem angeordnet ist, wobei das Verfahren die Schritte aufweist von
a) Kontinuierliches oder im Wesentlichen kontinuierliches Abtasten von auf die Strömung in dem Rohrleitungssystem bezogenen Werten;
b) Erhalten eines Strömungsmusters für das Rohrleitungssystem aus den auf die Strömung bezogenen Werten, die in Schritt a) erhalten wurden;
c) Bestimmen von einem oder mehreren Parametern aus dem Strömungsmuster;
d) Überwachen und/oder Testen des Rohrleitungssystems während der Verwendung von einem oder mehreren Parametern, die in Schritt c) bestimmt wurden,
**dadurch gekennzeichnet, dass**
in Schritt c) ein Parameter das Auftreten von einer oder mehreren strömungsfreien Perioden ist, dass das Strömungsmuster kontinuierlich aktualisiert wird, dass das Strömungsmuster gemäß einem rollierenden Zeitplan aus auf die Strömung bezogenen Werten, aufgezeichnet während eines vorgegebenen Zeitraum, kontinuierlich aktualisiert wird, und dass der einen oder mehrere Parameter gemäß den rollierenden Zeitplan kontinuierlich aktualisiert werden.

2. Verfahren nach Anspruch 1, wobei Schritt d) den folgenden Schritt aufweist:
d1) Durchführen des Drucktestens während zumindest einer störungsfreien Periode, die gemäß Schritt c) bestimmt wurde; wobei das Drucktesten bevorzugt durch Schließen des Ventils und Überwachen des Drucks in dem Rohrleitungssystem stromabwärts des Absperrventils durchgeführt wird.

3. Verfahren nach Anspruch 2, wobei ein gemessener Druckabfall in Schritt d1) mit einem Druckabfall-Grenzwert verglichen wird zum Detektieren des Auftretens von Leckage in dem Rohrleitungssystem.

4. Verfahren nach Anspruch 2 oder 3, wobei der Druck abgetastet wird und der Druckabfall zwischen zwei Abtastungen mit einem zweiten Druckabfall-Grenzwert verglichen wird, und wobei das Drucktesten abgebrochen wird, wenn dieser zweite Druckabfall-Grenzwert überschritten wird.

5. Verfahren nach einem der Ansprüche 2 bis 4, wobei das Drucktesten während einer Mehrzahl von strömungsfreien Perioden, die zeitlich nicht aneinander angrenzen, durchgeführt wird.

6. Verfahren nach einem der Ansprüche 2 bis 5, wobei eine Handlung durchgeführt wird, wenn das Auftreten von Leckage detektiert worden ist, wobei die Handlung einen oder mehrere der folgenden Schritte aufweist:
Geschlossenhalten des Absperrventils;
Senden eines elektronischen Signals an eine weitere elektronische Einheit;
Ausgeben eines Alarms.

7. Verfahren nach einem der vorherigen Ansprüche, wobei in Schritt c) ein Parameter ein Strömungslängen-Grenzwert ist,
und wobei Schritt d) die folgenden Schritte aufweist:
d2) Aufzeichnen der Zeit während der eine Strömung vorliegt;
d3) Vergleichen dieser Zeit mit dem Strömungslängen-Grenzwert, und
d4) Durchführen einer Handlung, wenn dieser Strömungslängen-Grenzwert überschritten wird.

8. Verfahren nach Anspruch 7, wobei die Handlung einen oder mehrere der folgenden Schritte aufweist:
Schließen des Absperrventils und dann erneutes Öffnen dessen;
Schließen des Absperrventils;
Senden eines Signals an eine weitere elektronische Einheit;
Ausgeben eines Alarms.

9. Verfahren nach Anspruch 7 oder 8, wobei der Strömungslängen-Grenzwert, mit einem Koeffizienten multipliziert, als die längste Zeit, während der eine kontinuierliche Strömung aufgezeichnet worden ist, bestimmt wird.

10. Verfahren nach Anspruch 9, wobei der Strömungslängen-Grenzwert gemäß dem Folgenden aktualisiert wird:
gemessene Strömungslänge wird mit einem gespeicherten größten Wert für die Strömungslänge verglichen;
wenn die gemessene Strömungslänge größer ist als der gespeicherte größte Wert für die Strömungslänge, die gemessene Strömungslänge dann als der größte Wert für die Strömungslänge gespeichert wird, und der Strömungslängen-Grenzwert darauf basierend aktualisiert wird.

11. Verfahren nach einem der vorherigen Ansprüche, wobei in Schritt c) ein Parameter ein Strömungsänderung-Grenzwert ist,
und wobei Schritt d) die folgenden Schritte aufweist:
d5) Berechnen der Strömungsänderung zwischen zwei abgetasteten Strömungswerten;
d6) Vergleichen dieser Strömungsänderung mit dem Strömungsänderung-Grenzwert, und
d7) Durchführen einer Handlung, wenn dieser Strömungsänderung-Grenzwert überschritten wird.

12. Verfahren nach Anspruch 11, wobei die Handlung einen oder mehrere der folgenden Schritte aufweist:
Schließen des Absperrventils und dann erneutes Öffnen dessen;
Schließen des Absperrventils;
Senden eines Signals an eine weitere elektronische Einheit;
Ausgeben eines Alarms.

13. System (1) zum Überwachen von Strömung und/oder zum Detektieren von einem oder mehreren Vorkommnissen in einem Rohrleitungssystem (2); wobei das System aufweist:
eine Ventileinheit (8), die angepasst ist, mit dem Rohrleitungssystem (2) verbunden zu werden, und eine Steuereinheit (10), die angepasst ist, mit der Ventileinheit (8) zu kommunizieren, und wobei die Ventileinheit (8) ein Absperrventil (12) aufweist, das angepasst ist, einen Einlass zu dem Rohrleitungssystem zu öffnen und/oder zu schließen, ein Druckmessgerät (14) das stromabwärts des Absperrventils (12) vorgesehen ist, um den Druck in dem Rohrleitungssystem (2) zu messen, ein Strömungsmessgerät (16) das vorgesehen ist, um die Strömung in dem Rohrleitungssystem (2) zu messen;
wobei die Steuereinheit (10) angepasst ist, mit dem Absperrventil (12) zu kommunizieren, um das Schließen und/oder Öffnen desselben zu steuern,
das Strömungsmessgerät (16), um Daten aus dem Strömungsmessgerät (16) zu erhalten und aufzuzeichnen, und mit dem Druckmessgerät (14), um Daten aus dem Druckmessgerät (14) zu erhalten, wobei die Steuereinheit (10) angepasst ist, mit der Ventileinheit (8) zu kommunizieren, um ein Verfahren nach einem der Ansprüche 1 bis 12 durchzuführen.

14. System (1) nach Anspruch 13, wobei die Steuereinheit (10) angepasst ist, das Schließen des Absperrventils (12) basierend auf der Detektion von einem oder mehreren der folgenden Vorkommnisse zu aktivieren:
Leckage, Tropfleckage, eine Strömung, die für eine lange Zeit fortwährt, eine ausgeprägte Strömungsänderung, eine ausgeprägte Strömung, wobei bevorzugt die Steuereinheit (10) konfiguriert ist, einen zweiten Betriebszustand zu aktivieren, wenn keine Strömung bestimmt wird während einer Zeitperiode, die einen vorbestimmten Grenzwert zum Aktivieren des zweiten Betriebszustands überschreitet.

## Revendications

1. Procédé de surveillance d'un système de tuyauterie (2) et/ou de détection d'un ou de plusieurs évènements dans un système de tuyauterie qui comprend une valve d'arrêt (12), agencée dans ledit système de tuyauterie, ledit procédé comprenant les étapes de
a) échantillonnage en continu ou sensiblement en continu de valeurs liées au flux dans ledit système de tuyauterie ;
b) à partir desdites valeurs liées au flux obtenues à l'étape a), obtention d'un motif de flux pour ledit système de tuyauterie ;
c) à partir dudit motif de flux, détermination d'un ou de plusieurs paramètres ;
d) surveillance et/ou test du système de tuyauterie pendant une utilisation d'un ou de plusieurs paramètres déterminés à l'étape c),
**caractérisé en ce que**
à l'étape c) un paramètre est l'occurrence d'une ou de plusieurs périodes libres de flux, **en ce que** ledit motif de flux est mis à jour en continu, **en ce que** ledit motif de flux est mis à jour selon un calendrier de déploiement à partir des valeurs relatives au flux enregistré pendant une période de temps, et **en ce que** l'un ou plusieurs paramètres sont mis à jour en continu selon le calendrier de déploiement.

2. Procédé selon la revendication 1, moyennant quoi l'étape d) comprend l'étape suivante :
d1) réalisation de test de pression pendant au moins une période libre de flux déterminée selon c) ; moyennant quoi le test de pression est de préférence réalisé par fermeture de la valve et surveillance de la pression dans le système de tuyauterie en aval de la valve d'arrêt.

3. Procédé selon la revendication 2, moyennant quoi une chute de pression mesurée à l'étape d1) est comparée avec un seuil de chute de pression pour détecter l'occurrence de fuite dans le système de tuyauterie.

4. Procédé selon la revendication 2 ou 3, moyennant quoi la pression est échantillonnée et la chute de pression entre deux échantillons est comparée avec un second seuil de chute de pression, et moyennant quoi le test de pression est interrompu si ce second seuil de chute de pression est excédé.

5. Procédé selon l'une quelconque des revendications 2 à 4, moyennant quoi un test de pression est réalisé pendant une pluralité de périodes libres de flux, qui ne sont pas adjacentes les unes aux autres dans le temps.

6. Procédé selon l'une quelconque des revendications 2 à 5, moyennant quoi une action est réalisée si l'occurrence de fuite a été détectée, moyennant quoi ladite action comprend une ou plusieurs des étapes suivantes :
maintien de la valve d'arrêt fermée ;
envoi d'un signal électronique à une autre unité électronique ;
émission d'une alarme.

7. Procédé selon une quelconque revendication précédente, moyennant quoi à l'étape c) un paramètre est un seuil de longueur de flux,
et moyennant quoi l'étape d) comprend les étapes suivantes :
d2) enregistrement du temps pendant lequel un flux est en cours ;
d3) comparaison de ce temps avec le seuil de longueur de flux, et
d4) réalisation d'une action s'il excède ce seuil de longueur de flux.

8. Procédé selon la revendication 7, moyennant quoi ladite action comprend une ou plusieurs des étapes suivantes :
fermeture de la valve d'arrêt et ensuite ouverture de celle-ci de nouveau ;
fermeture de la valve d'arrêt ;
envoi d'un signal à l'autre unité électronique ;
émission d'une alarme.

9. Procédé selon la revendication 7 ou 8, moyennant quoi le seuil de longueur de flux est déterminé comme le temps le plus long pendant lequel un flux continu a été enregistré, multiplié par un coefficient.

10. Procédé selon la revendication 9, moyennant quoi le seuil de longueur de flux est mis à jour selon ce qui suit :
une longueur de flux mesurée est comparée à une valeur la plus élevée sauvegardée pour une longueur de flux ;
si une longueur de flux mesurée est supérieure à ladite valeur la plus élevée sauvegardée pour une longueur de flux, ensuite une longueur de flux mesurée est sauvegardée comme la valeur la plus élevée pour la longueur de flux, et le seuil de longueur de flux est mis à jour sur cette base.

11. Procédé selon une quelconque revendication précédente, moyennant quoi à l'étape c) un paramètre est un seuil de changement de flux,
et moyennant quoi l'étape d) comprend les étapes suivantes :
d5) calcul du changement de flux entre deux valeurs de flux échantillonnées ;
d6) comparaison de ce changement de flux avec le seuil de changement de flux, et
d7) réalisation d'une action s'il excède ce seuil de changement de flux.

12. Procédé selon la revendication 11, moyennant quoi ladite action comprend une ou plusieurs des étapes suivantes :
fermeture de la valve d'arrêt et ensuite ouverture de celle-ci de nouveau ;
fermeture de la valve d'arrêt ;
envoi d'un signal à une autre unité électronique ;
émission d'une alarme.

13. Système (1) de surveillance de flux et/ou de détection d'un ou de plusieurs évènements dans un système de tuyauterie (2) ; dans lequel le système comprend :
une unité de valve (8) adaptée pour être reliée audit système de tuyauterie (2) et une unité de commande (10) adaptée pour communiquer avec l'unité de valve (8), dans lequel ladite unité de valve (8) comprend
une valve d'arrêt (12) adaptée pour ouvrir et/ou fermer une entrée audit système de tuyauterie,
un manomètre (14) prévu en aval de ladite valve d'arrêt (12) pour mesurer une pression dans ledit système de tuyauterie (2),
un débitmètre (16) prévu pour mesurer un flux dans ledit système de tuyauterie (2) ;
dans lequel ladite unité de commande (10) est adaptée pour communiquer avec ladite valve d'arrêt (12) pour commander une fermeture et/ou une ouverture de celle-ci,
ledit débitmètre (16) pour obtenir et enregistrer des données dudit débitmètre (16), et avec ledit manomètre (14) pour obtenir des données dudit manomètre (14),
dans lequel
ladite unité de commande (10) est adaptée pour communiquer avec ladite unité de valve (8) pour réaliser un procédé selon l'une quelconque des revendications 1 à 13.

14. Système (1) selon la revendication 13, dans lequel ladite unité de commande (10) est adaptée pour activer une fermeture de ladite valve d'arrêt (12) sur la base de la détection d'un ou de plusieurs événements suivants :
fuite, fuite d'égouttement, un flux qui est en cours pour un long temps, un changement de flux important, un flux important, dans lequel de préférence ladite unité de commande (10) est configurée pour activer un second état opérationnel si aucun flux n'est détecté pendant une période de temps qui excède un seuil prédéterminé pour l'activation dudit second état opérationnel.
